# FASCICULE DE BREVET EUROPEEN

(11) **EP 1 157 050 B1**
(45) Date de publication et mention de la délivrance du brevet: **06.05.2004**
(21) Numéro de dépôt: 99925107.7
(22) Date de dépôt: 15.06.1999
(51) Int. Cl.: C08F 220/60, C08F 220/34, C08F 220/54

(54) **DERIVES ZWITTERIONIQUES ET APPLICATION AUX PROPRIETES DES SUSPENSIONS AQUEUSES**
ZWITTERIONISCHE DERIVATE UND DEREN VERWENDUNG IN WÄSSRIGEN SUSPENSIONEN
ZWITTERION DERIVATIVES AND APPLICATION TO AQUEOUS SUSPENSION PROPERTIES

(30) Priorité: 06.07.1998 FR 9808722
(43) Date de publication de la demande: 28.11.2001
(73) Titulaire: Institut Français du Pétrole, 92852 Rueil-Malmaison Cedex (FR)
(72) Inventeur: ARGILLIER, Jean-François, 92210 Saint-Cloud (FR); AUDIBERT-HAYET, Annie, 78290 Croissy sur Seine (FR); LE PERCHEC, Pierre, 69003 Lyon (FR); CARRETTE, Pierre-Louis, 69002 Lyon (FR)
(86) Numéro de dépôt international: PCT/FR1999/001438
(87) Numéro de publication internationale: WO 2000/001746

(56) Documents cités:
- EP-A- 0 283 817
- FR-A- 2 572 078
- GB-A- 2 260 985
- US-A- 3 836 537
- US-A- 4 704 229

## Description

La présente invention est relative à de nouveaux polymères hydrosolubles zwitterioniques, leur préparation et leurs utilisations.

Du fait de leurs compositions et de leurs masses molaires, les polymères hydrosolubles d'origine synthétique ou naturelle sont abondamment utilisés à faible concentration comme agents modificateurs des propriétés des solutions aqueuses et, par action sur des particules en suspension, comme agents modificateurs des propriétés de surfaces.

A cet égard, on connaît notamment les usages des polyélectrolytes polycationiques de type polyalkylènes dialkylammonium qui apportent un effet viscosifiant élevé aux solutions aqueuses et les polymères hydrosolubles polyanioniques tels que les polyacrylates ou les polynaphthalènes sulfonates de sodium qui permettent la dispersion de minéraux dans l'eau.

Leur utilisation fait apparaître des limitations d'usages liées à la sensibilité et à l'instabilité des solutions notamment en présence de sels ou du fait de l'élévation de température et dans certains cas, du fait de leurs effets néfastes sur l'environnement.

Les polymères hydrosolubles zwitterioniques de la présente invention se révèlent efficaces comme agent viscosifiant des solutions aqueuses sur une large gamme de salinité et de température et comme agent modificateur de surfaces de particules en suspensions aqueuses et, par ailleurs, sont mieux acceptés du fait d'une meilleure compatibilité environnementale.

Les applications de ce type de polymères hydrosolubles zwitterioniques sont celles retenues généralement dans l'industrie pétrolière comme fluides de puits de pétrole, dans l'industrie des peintures comme additifs compatibilisant des pigments, en cosmétologie et industrie du papier et sans en restreindre l'utilisation comme agent de traitement des argiles pour l'industrie des films photographiques et des boues de forages notamment. Ils sont utilisés également comme agents de contrôle de la rhéologie des suspensions aqueuses.

Du fait de leur structure, les polymères selon l'invention peuvent aussi présenter des propriétés d'additifs dits "Drag reducer" pour l'écoulement de certains fluides, notamment en régime turbulent. Ces types d'additifs limitent la friction des fluides sur les parois.

Pour la formulation des fluides de puits de pétrole, fluides de forage et fluides de conditionnement ou de production, on peut citer les applications potentielles telles que l'effet réducteur de filtrat, l'effet inhibiteur de gonflement des argiles, l'effet inhibiteur de délitage des déblais ou de roches argileuses. On sera alors amené selon l'application et donc les propriétés recherchées, à sélectionner le niveau de charge utile du polymère hydrosoluble zwitterionique défini dans l'invention.

Les polymères classiquement utilisés dans les fluides à base d'eau sont des dérivés d'acrylamide, généralement des copolymères acrylamide/acrylate obtenus par copolymérisation de l'acrylamide et d'acrylate ou par hydrolyse du polyacrylamide.

Ils sont toutefois sensibles aux conditions de mise en oeuvre et d'utilisations que l'on peut rencontrer. Un gradient de cisaillement important, une température au fond du puits élevée, entraînent une diminution de leur masse molaire et de leur pouvoir viscosifiant. Ils sont, de plus, sensibles aux milieux de force ionique élevée du fait de la présence de groupements carboxylates ou sulfonates qui entraînent également une perte de leur pouvoir viscosifiant, voire une précipitation des molécules dans les milieux fortement concentrés en ions divalents.

Pour les applications en milieu salin, les polyampholytes porteurs à la fois de charges positives et de charges négatives peuvent être adaptés. Quand les charges sont en nombre égal (polyampholytes neutres) et l'échange de proton supprimé, les propriétés en solution aqueuse de ces produits sont régies par les forces attractives qui existent entre les charges de signes opposés. Ils sont en général plus solubles et présentent des viscosités plus importantes en milieu salin que dans l'eau désionisée. On parle alors de comportement antipolyélectrolyte pour ce type de polymère.

Dans le cas des polyampholytes n'ayant pas le même nombre de charges positives et négatives, selon l'importance de l'excès d'un type de charge par rapport à l'autre, c'est l'effet polyélectrolyte ou l'effet polyampholyte neutre qui caractérise le comportement en solution (Corpart et al, *Macromolecules*, **1993**, *26* (6), 1333).

Ces produits sont déjà cités pour de nombreuses applications, en particulier pour la formulation de produits détergents, des applications cosmétiques, celles-ci dépendant de la nature du zwitterion, de leur composition et de la masse molaire du polymère.

Lorsque le monomère comporte exactement un groupement ammonium et une fonction anionique, il appartient à la famille des bétaïnes et les charges forment un sel interne. Les polymères de l'invention présentent cette particularité, à savoir que les charges de signes opposés sont sur le même groupe latéral de type bétaïne. Ce sont des polymères électriquement neutres. La charge positive est apportée par une fonction ammonium quaternaire, la charge négative par un groupe sulfonate (sulfobétaines) ou phosphonate (phosphobétaines).

Certains copolymères ont été obtenus par copolymérisation d'acrylamide avec des monomères de type carboxybétaine (Kathmann et al ; *Polymer*, **1997**, *38* (4), 871). Ils ont des propriétés en solution fortement dépendantes du pH et incompatibles avec les propriétés recherchées. En effet, à faible pH, la protonation des fonctions carboxylates entraîne la perte du caractère zwitterionique et le copolymère se comporte comme un polyélectrolyte cationique donc sensible en particulier à la présence de sel.

Les polybétaines décrites ici présentent l'avantage de conserver leur caractère zwitterionique sur un grand domaine de pH. Certains copolymères d'acrylamide et de sulfobétaines sont déjà décrits mais sont le résultat de procédé de synthèse en présence de sels, ce qui a une importance notable sur les structures obtenues. « Hydrophilic sulphobetaine copolymers of acrylamide and 3-(2-acrylamido-2-methylpropanedimethylammonio)-1-propanesulphonate » par L. McCormick et al - POLYMER, 1992, Volume 33, Number 21.

L'objet de l'invention concerne la synthèse et les propriétés en solution des copolymères zwitterioniques. Les copolymères de zwitterionomères copolymérisés avec un acrylamide ou un acrylate plus ou moins substitués répondent à la description de la formule générale définie ci-après.

Les polymères ont pour structure générale: 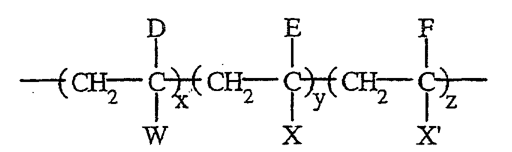
- W est un groupement CONH₂ ou CONHR ou CONRR' ou COO⁻ ou COOR", où R, R' et R" sont des radicaux aliphatiques linéaires ou ramifiés.
- x, y, z pourcentage molaire, y + z non nul
- D, E et F sont un atome d'hydrogène ou un groupement méthyle.
- X et X' répondent à l'une des deux formules suivantes: 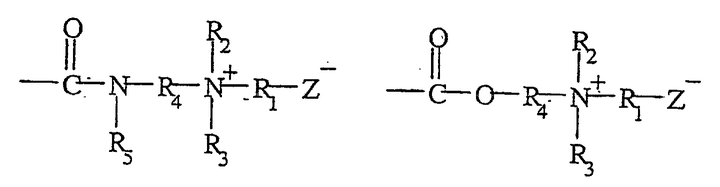
- R₂ et R₃ sont chacun un radical hydrocarboné monovalent,
- R₁ est un groupement organique divalent comprenant une chaîne linéaire constituée d'atomes de carbone, l'ensemble contenant de 3 à 12 atomes en chaîne linéaire, pouvant être interrompue par 1 atome d'azote porteur d'une fonction amide ou par 1 à 3 atomes d'oxygène et comprenant éventuellement des substituants alkyles ou hydroxyles.
- R₄ un groupement aliphatique linéaire ou ramifié et R₅ un radical hydrocarboné,
- Z⁻ répond à au moins l'une des formules suivantes correspondant respectivement aux sulfobétaines et aux phosphobétaines: 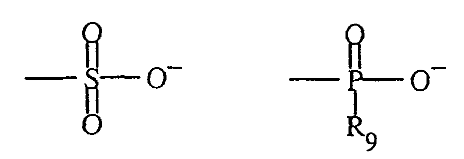
- R₉ est un radical méthyle, phényl ou alkoxy.
- dans le cas où la synthèse des polymères a lieu en absence de sels:
   (y + z)max = 40%. (y + z non nul.)
- dans le cas des phosphobétaines et d'une synthèse en présence de sels:
   (y + z)max = 100% (y + z non nul)

Dans le cas des sulfobétaines, R₁ peut être l'une des deux formules suivantes: 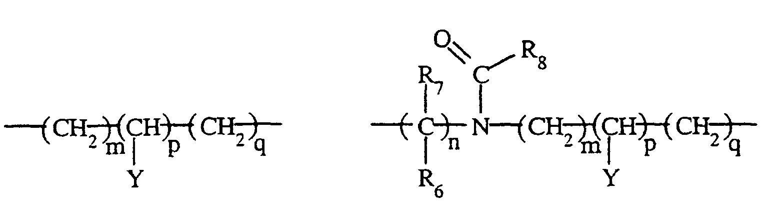 dans lesquelles R₆ et R₇ représentent chacun un radical substantiellement hydrocarboné et R₈ un atome d'hydrogène ou un radical hydrocarboné; n est un nombre entier égal à 2 ou à 3; Y peut être un groupement méthyle ou hydroxyle; p peut être égal à 0 ou 1. n, m, p, q nombres entiers.

Lorsque Y est un groupement hydroxyle, p est égal à 1, m est égal à 1 et q est égal à 1.

Lorsque Y est un groupement méthyle, p est égal à 1, m est égal à 2 et q peut prendre la valeur 0 ou 1.

Si p est égal à 0, la somme m+q est égale à 2, 3 ou 4.

Dans le cas des phosphobétaines, R₁ peut répondre à l'une des quatre formules suivantes : 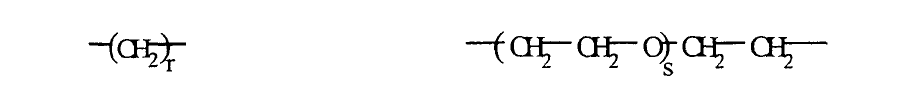 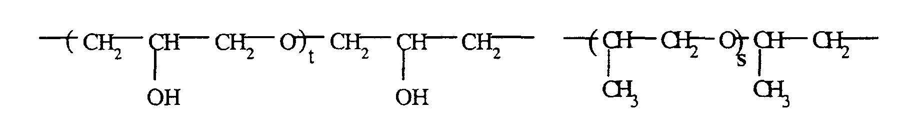 r est un nombre entier pouvant prendre les valeurs de 3 à 12, s est un nombre entier pouvant prendre les valeurs de 1 à 3 et t est un nombre entier pouvant prendre les valeurs 1 ou 2.

Des copolymères zwittérioniques particuliers selon la présente invention sont décrits dans les revendications 7 et/ou 8.

### Synthèse des polymères hydrosolubles zwitterioniques

Le principe général de la synthèse des polymères de l'invention, limité par le seul qualificatif d'hydrosolubilité, consiste en la polymérisation d'un ou de plusieurs monomères dont l'un au moins est zwitterionique, lequel entre dans la composition du mélange initial de copolymérisation. Le polymère est obtenu selon une voie connue de la polymérisation en solution aqueuse en présence d'un amorceur hydrosoluble de polymérisation radicalaire qui peut être le persulfate de potassium.

La synthèse des monomères zwitterioniques dont la nature de la tête polaire (carboxylate, sulfonate, phosphonate), la structure du squelette hydrocarboné, la nature des substituants, les distances intercharges et la nature du groupe polymérisable peuvent être ajustées en prenant comme référence des méthodes de synthèse connues de l'art antérieur pour produire des composés zwitterioniques nouveaux en particulier par leur caractère polymérisable (documents US-4 704 229 et FR-2 572 078).

L'opération de co- ou ter- polymérisation de deux ou plusieurs comonomères s'effectue alors par la préparation de mélanges de comonomères placés dans un réacteur agité et thermostaté à une température qui assure le suivi de la copolymérisation. Les compositions choisies en zwitterionomères varient entre 0 et 100%, de préférence entre 0.1 et 40% et en particulier entre 1 et 10%. La température de copolymérisation fixée entre 25 et 90°C et de préférence entre 35-60°C a été déterminée de façon à obtenir un copolymère après moins de dix heures de maintien en réaction et de préférence entre 1 à 3 heures de réaction pour des taux de conversion de l'ordre de 10 à 80%, lesquels sont limités par la viscosité du milieu réactionnel.

### Exemples

Des monomères de type sulfobétaine et phosphobétaine ont été préparés puis copolymérisés avec l'acrylamide. Cette méthode permet le contrôle de la masse molaire et de l'incorporation des motifs zwitterioniques.

Dans le cadre de cette invention, les monomères et les copolymères synthétisés sont exempts de sel. On a montré que ce procédé permet de contrôler la structure des produits ainsi obtenus, ainsi que leurs propriétés en solution. Les produits selon l'invention ainsi obtenus ont été caractérisés par RMN¹ H et ¹³C. Deux appareils ont été utilisés : un BRUKER AC 250 et un BRUKER DRX 400 fonctionnant en ¹H respectivement à 250.13 MHz et 400.13 MHz, et en ¹³C respectivement à 62.89 MHz et à 100.62 MHz. Les mesures ont été faites à 294 K. Les déplacements chimiques (δ) des signaux décrits sont exprimés en ppm par rapport au TMS dans CDCl₃ et CD₃OD et au TSPd₄ (3-triméthylsilyl-2,2',3,3'-d₄-propionate de sodium) dans D₂O (la valeur de son déplacement chimique en RMN ¹³C à 294 K est de -2.35). Les abréviations utilisées pour la RMN ¹H sont : s: singulet; d: doublet; t: triplet; q: quadruplet; qt: quintuplet; m: multiplet et correspondent à ce qui est observé sur les spectres.

### I) Synthèse des monomères zwitterioniques:

### Exemple 1:

### Synthèse du: 3-[(3-acrylamidopropyl)diméthylammonio]propanesulfonate:

### 1ère étape :

Cette première étape est réalisée en l'absence de sels. 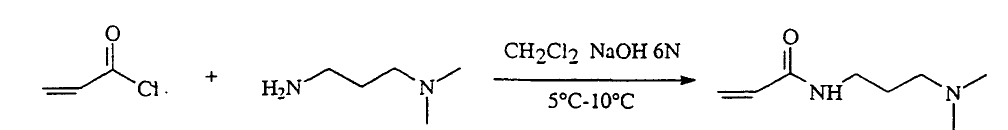 12.6 ml de 3-aminopropyldiméthylamine (M=102.18 g/mol - d=0.812 - 0.1 mol) sont ajoutés au mélange de 80 ml de dichlorométhane et de 25 ml de solution d'hydroxyde de sodium 6N agité magnétiquement. La température du milieu réactionnel est abaissée à 5°C. La solution de 8.45 ml de chlorure d'acryloyle (M=90.51 g/mol - d=1.114 - 1.04éq) dans 20 ml de dichlorométhane est alors ajoutée sous courant d'argon, la température étant maintenue inférieure à 10°C. L'agitation est prolongée pendant une heure après la fin de l'addition. La phase organique est alors séparée de la phase aqueuse et séchée sur sulfate de sodium. Après évaporation du solvant, la distillation du brut réactionnel en présence d'hydroquinone (Eb=93°C-P=0.13 mbar) donne 9.31 g de 3-acrylamidopropyldiméthylamine (M=156.23 g/mol). Rendement : 60%. La structure et la pureté du produit sont confirmées par RMN ¹H (250 MHz-CDCl₃-TMS) δ 7.74 (1H, s) 6.19 (2H, m) 5.59 (1H, dd, 9 Hz, 2.8 Hz) 3.39 (2H, q, 6.6 Hz) 2.38 (2H, t, 6.6 Hz) 2.22 (6H, s) 1.69 (2H, qt, 6.6 Hz).

### 2ème étape :

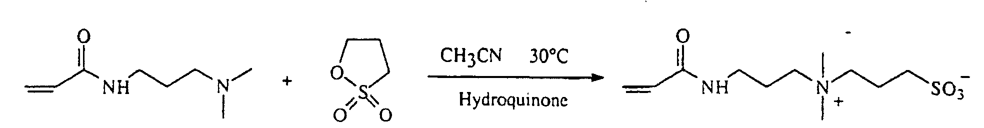

La solution de 6.2 g de 3-acrylamidopropyldiméthylamine (M=156.23 g/mol - 39.7 mmol) et de 88 mg d'hydroquinone (M=110.11 mol/l - 0.02éq) dans 17 ml d'acétonitrile anhydre est agitée magnétiquement à température ambiante sous courant d'argon. La solution de 3.5 ml de propanesultone distillée (M=122.14 g/mol - d=1.392 - léq) dans 5 ml d'acétonitrile anhydre est ajoutée goutte à goutte. Un précipité blanc apparaît. La suspension est agitée sous courant d'argon pendant 24 heures à température ambiante. Le précipité est alors filtré, lavé à l'acétonitrile anhydre puis à l'acétone anhydre, et séché. 10.3 g de 3-[(3-acrylamidopropyl)diméthylammonio]propanessulfonate (M=278.36 g/mol) sont ainsi obtenus. Rendement : 93%. La pureté du produit est contrôlée par analyse élémentaire : C: 47.27%; H: 7.88%; N: 10.41%; S: 11.55%, les pourcentages calculés à partir de la formule brute (C₁₁H₂₂N₂O₄S) étant les suivants : C: 47.46%; H: 7.97%; N: 10.06%; S: 11.52%.

La structure est confirmée par RMN ¹H (400 MHz-D₂O-TSPd₄) δ 6.27 (2H, m) 5.79 (1H, dd, 8.7 Hz, 2.9 Hz) 3.49 (2H, m) 3.40 (4H, m) 3.35 (6H, s) 2.99 (2H, t, 7.1 Hz) 2.22 (2H, qt, 7.1 Hz) 2.07 (2H, qt, 7.1 Hz).

Le 3-[(3-acrylamidopropyl)diméthylammonio]propanesulfonate obtenu possède trois méthylènes intercharge. Cette distance peut être modifiée en mettant en oeuvre d'autres méthodes de synthèse à partir de la 3-acrylamidopropyldiméthylamine ou d'une autre amine tertiaire porteuse d'une fonction polymérisable.

On peut citer à titre d'exemple:
- 2 méthylènes intercharge : réaction de la fonction amine tertiaire avec des chlorures d'alcénylsulfonyles (Wielema, T.A.; Engberts, J.B.F.N. *Eur*. *Polym*. J. **1987**, 23 (12), 947).
- 4 méthylènes intercharge : remplacer la propanesultone par la butanesultone (Hart, R; Timmerman, D. J. *Polym*. *Sci*. **1958**, 28, 638).
- Distances intercharge correspondant à 5, 6 ou 7 méthylènes et un atome d'azote : ouverture de cycle d'un cycloiminiosulfonate formé par réaction de la propanesultone ou de la butanesultone avec la 2-méthyl-1,3-oxazoline ou la 2-méthyl-(4H)-5,6-dihydro-1,3-oxazine (Brunel, S.; Chevalier, Y.; Le Perchec, P. *Tetrahedron* **1989**, 45 (11), 3363).

Toutes ces méthodes donnent des produits exempts de sels. Du fait de l'absence de sels, le milieu réactionnel présente au fur et à mesure de l'avancement de la réaction une augmentation très forte de viscosité. Ceci entraîne une limitation du taux de zwitterions introduits dans le copolymère de 40%. Si l'on souhaite aller au delà et ce, jusqu'à 100% de zwitterions, il est nécessaire d'introduire une certaine concentration en sels dans le milieu réactionnel pour les différentes étapes décrites précédemment.

### Exemple 2 :

### Synthèse du 6-[(3-acrylamidopropyl)diméthylammonio]4-acétyl4-azahexanesulfonate :

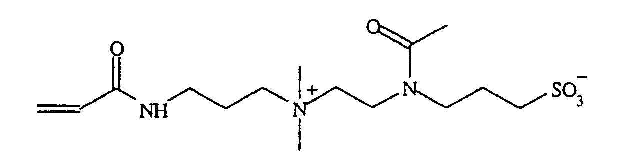

### 1ère étape :

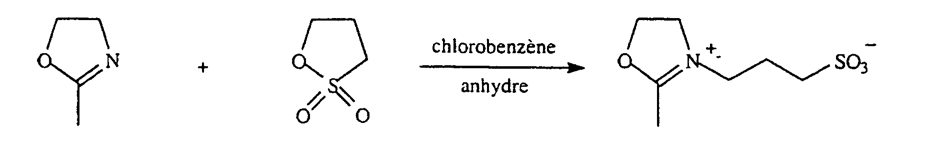

6.96 g de propanesultone (M=122.14 g/mol - 57 mmol) et 5.82 g de 1,3-oxazoline (M=85.11 g/mol - 68 mmol - 1.2éq) sont dissous dans 38 ml de chlorobenzène séché sur alumine. La solution est agitée à température ambiante sous courant d'argon pendant 48 heures. 5 ml de cyclohexane sont alors ajoutés. Le précipité blanc formé est filtré sous argon, lavé au cyclohexane et séché. 10.6 g de 3-[(2-méthyl)1,3-oxazolinium]propanesulfonate (M=207.24 g/mol) sont ainsi obtenus. Rendement : 90%. La structure et la pureté du produit sont confirmées par RMN¹H (250 MHz-CD₃OD-TMS) δ 4.95 (2H, t, 9.8 Hz) 4.21 (2H, t, 9.8 Hz) 3.92 (2H, t, 7.0 Hz) 2.91 (2H, t, 7.0 Hz) 2.49 (3H, s) 2.20 (2H, qt, 7.0 Hz).

### 2ème étape :

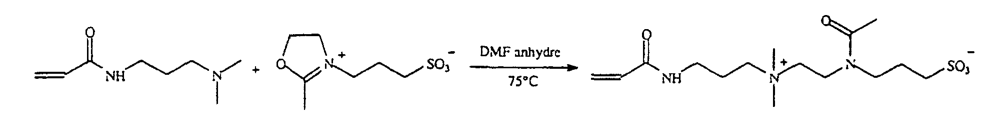

1 g de 3-acrylamidopropyldiméhtylamine (M=156.23 g/mol - 6.4 mmol), 1.33 g de 3-[(2-méthyl)1,3-oxazolinium]propanesulfonate (M=207.24 g/mol - 6.4 mmol - léq) et 35 mg d'hydroquinone (M=110.11 g/mol - 0.05éq) sont dissous dans 15 ml de diméthylformamide anhydre. La solution est agitée à 75°C sous courant d'argon pendant 18 heures puis versée dans 150 ml d'acétone anhydre. Le produit précipité est filtré, lavé au dichlorométhane et séché. 2 g de 6-[(3-acrylamidopropyl)diméthylammonio]4-acétyl4-azahexanesulfonate (M=363.47 g/mol) sont ainsi obtenus. Rendement : 86 %. La structure et la pureté du produit sont confirmées par RMN¹H (250 MHz-D₂O-TSPd₄) δ 6.27 (2H, m) 5.79 (1H, dd, 8.7 Hz, 2.9 Hz) 3.78 (2H, t, 7.0 Hz) 3.57 (2H, t, 7.0 Hz) 3.32-3.48 (6H, m) 3.1 (6H, s) 2.95 (2H, t, 7 Hz) 1.9-2.25 (7H, m).

### Exemple 3 :

### Synthèse du : 3-[(3-acrylamidopropyl)diméthylammonio]propanephosphonate d'éthyle .

### 1ère étape :

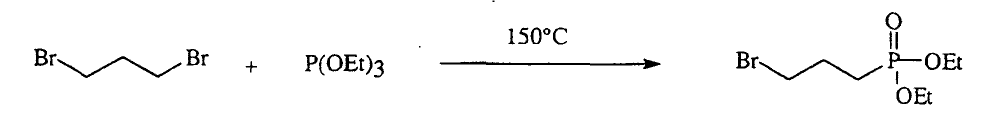

Le mélange de 31 ml de phosphite de triéthyle (M=166.16 g/mol - d=0.969 - 181 mmol) et de 128 ml de 1,3-dibromopropane (M=201.89 - d=1.989 - 7éq) est chauffé pendant une heure et demi à 150°C. Le bromoéthane dégagé est récolté par condensation. La distillation du 1,3-dibromopropane en excès est suivie de celle du 3-bromopropylphosphonate d'éthyle ( Eb=73°C - P=2.10⁻³ mbar - M=259.08 g/mol) dont 34.1 g sont ainsi obtenus. Rendement : 73%. La structure et la pureté du produit sont confirmées par RMN¹H (250 MHz-CDCl₃) δ 4.06 (4H, m) 3.48 (2H, t, 6.3 Hz) 2.16 (2H, m) 1.90 (2H, m) 1.34 (6H, t, 7.0 Hz).

### 2ème étape :

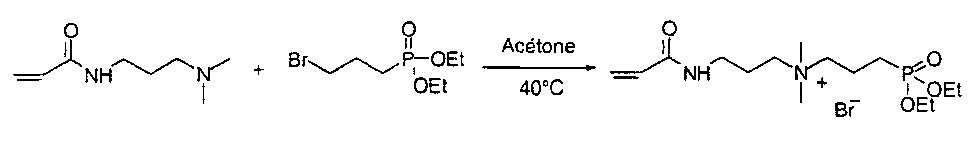

La solution de 2.34 g de 3-acrylamidopropyldiméthylamine (M=156.23 g/mol - 15 mmol) et de 5.83 g de 3-bromopropylphosphonate d'éthyle (M=259.08 g/mol - 1.5 éq) dans 40 ml d'acétone est chauffée pendant 3 jours à 40°C. 300 ml d'eau sont alors ajoutés et l'acétone évaporée. Le 3-bromopropylphosphonate d'éthyle en excès est éliminé par extraction au dichlorométhane. Le rendement en bromure de 3-[(3-acrylamidopropyl)diméthylammonio] propanephosphonate de diéthyle (C₁₅H₃₂BrN₂O₄P - M=415.31 g/mol), donné par dosage du phosphore en solution, est supérieur à 90%. La structure et la pureté du produit sont confirmées par RMN¹H (250 MHz-D₂O) δ 6.24 (2H, m) 5.80 (1H, dd, 8.5 Hz, 2.9 Hz) 4.17 (4H, qt, 7.1 Hz) 3.40 (6H, m) 3.11 (6H, s) 2.02 (6H, m) 1.35 (6H, t, 7.1 Hz).

### 3ème étape :

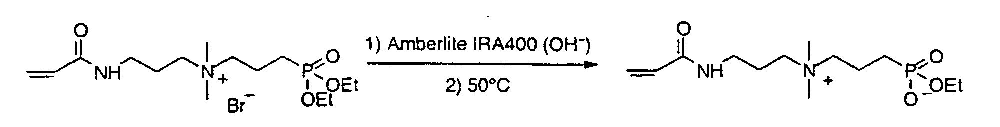

700 ml de solution aqueuse de bromure de 3-[(3-acrylamidopropyl) diméthylammonio]propanephosphonate de diéthyle (M=415.31 g/mol- C=71.4 mmol/l 50 mmol) sont passés sur résine Amberlite IRA400(OH).
La solution aqueuse d'hydroxyde de 3-[(3-acrylamidopropyl) diméthylammoniolpropanephosphonate de diéthyle ainsi obtenue est concentrée 10 fois à l'évaporateur rotatif puis chauffée à 50°C pendant 12 heures. Après distillation de l'éthanol formé, le dosage du phosphore en solution indique l'obtention de 12.7 g de 3-[(3-acrylamidopropyl)diméthylammonio] propanephosphonate d'éthyle (M=306.34 g/mol). Rendement : 80%. Le spectre RMN¹H confirme la structure du produit et indique une pureté supérieure à 95%. RMN¹H (250 MHz-D₂O) δ 6.24 (2H, m) 5.80 (1H, dd, 8.9 Hz, 2.9 Hz) 3.93 (2H, qt, 7.1 Hz) 3.37 (6H, m) 3.10 (6H, s) 2.02 (4H, m) 1.63 (2H, dt, 16.5 Hz, 7.8 Hz) 1.27 (3H, t, 7.1 Hz).

Remarque: les réactions secondaires sont évitées par un contrôle de la température et du pH.

### II) Synthèse des copolymères polyzwitterioniques :

### Exemples 4 et 5 :

### La copolymérisation est représentée par les réactions suivantes:

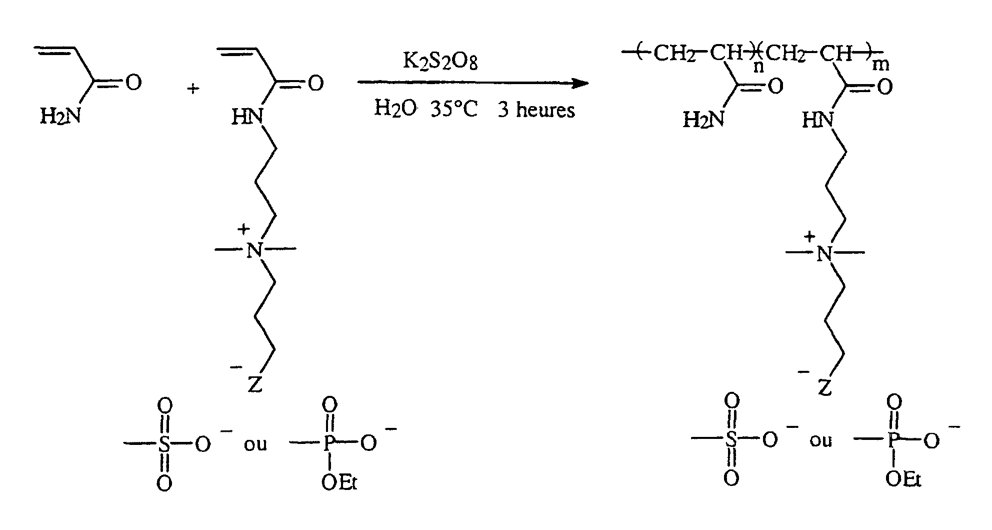

Les copolymères :
- PSAM de 3-[(3-acrylamidopropyl)diméthylammonio]propanesulfonate (APS: synthèse selon l'exemple 1), ou
- PPEAM de 3-[(3-acrylamidopropyl)diméthylammonio]propane phosphonate d'éthyle (APPE: synthèse selon l'exemple 3),
avec l'acrylamide (AM) ont été préparés par polymérisation radicalaire en solution aqueuse non saline sous courant d'argon à 35°C en utilisant le persulfate de potassium 1‰ molaire comme amorceur, la concentration monomérique totale étant de 0.45 mol/l. La réaction est arrêtée au bout de 3 heures, permettant un taux de conversion de 80%. Les copolymères, précipités et lavés dans le méthanol, bon solvant de l'acrylamide et des monomères zwitterioniques utilisés, sont d'une grande pureté. L'utilisation d'une faible température de copolymérisation a permis d'éviter toute hydrolyse de fonctions amides.

La masse molaire peut être ajustée en changeant la quantité d'amorceur ou en utilisant un agent de transfert tel que l'isopropanol par exemple. Cette méthode de synthèse permet d'obtenir des copolymères présentant au plus 40% de motifs zwitterioniques. Si la polymérisation est réalisée dans une solution aqueuse de chlorure de sodium, par exemple, on peut obtenir un polymère comportant jusqu'à 100% de motifs zwitterioniques.

Les rapports de réactivité des différents monomères, obtenus à forte conversion par la méthode graphique de Tüdos et al. (Tüdos, F.; Kelen, T.; Földes-Berezsnich, T. and Turcsanyi, B. *J*. *Macromol*. *Sci*.-*Chem*. **1976**, *A10* (8), 1513-1540), sont présentés dans le tableau suivant :

| | PPEAMm | PSAM |
|---|---|---|
| r₁ (APS ou APPE) | 0.25 | 1.26 |
| r₂ (AM) | 1.11 | 0.92 |
| r₁r₂ | 0.28 | 1.16 |

Dans le cas des copolymères PSAM, les rapports de réactivité sont proches de 1 ce qui signifie qu'il s'agit de copolymères statistiques.

En ce qui concerne les copolymères PPEAM, r₁ est environ 4 fois plus faible-que r₂ qui est proche de 1. Ces produits ont donc une légère tendance à l'alternance.

Des exemples de produits obtenus sont décrits ci-dessous :

| | % molaire de motifs zwitterioniques^{a} | Mw^{b} en g/mol |
|---|---|---|
| PSAM-5 | 5,2 | 1330000 |
| PSAM-5-2 | 4,9 | 408 000 |
| PSAM-1 | 1,6 | 1 190 000 |
| PSAM-10 | 10,5 | 1 400 000 |
| PPEAM-5 | 4,5 | 1 850 000 |
| PPEAM-1 | 0,8 | 890 000 |

| | | |
|---|---|---|
| ^{a} Déterminé à partir de l'analyse élémentaire : %Zwi =[1/(n_{N}/n_{S}-1)]*100 avec n_{N} et n_{S} respectivement le nombre de moles d'azote et de soufre, n_{S} étant remplacé par n_{P} dans le cas des copolymères PPEAM. | | |
| ^{b} Déterminée par diffusion de la lumière aux petits angles dans une solution aqueuse de NaCl 5g/l. | | |

Le chiffre immédiatement à droite du nom du copolymère correspond au pourcentage de monomère zwitterionique dans le mélange réactionnel.

### Comportement en solution

Différents produits sont comparés ; l'un d'eux le HPAM-5 est obtenu par copolymérisation d'acrylamide et d'acrylate de sodium, respectivement 95 et 5% molaire.

| | Mw×10^{-6^{b}} g/mol | [η] ml/g | k' |
|---|---|---|---|
| PAM | 1,67 | 671 | 0,56 |
| HPAM-5 | 1,72 | 1625 | 0.40 |
| PSAM-1 | 1,19 | 397 | 0,38 |
| PSAM-5 | 1,33 | 379 | 0,53 |
| PPEAM-1 | 0,89 | 255 | 0,38 |
| PPEAM-5 | 1,85 | 657 | 0,30 |

Les données sont obtenues en solution aqueuse de NaCl 5 g/l, pour une concentration en polymère comprise entre 0.5 et 15 g/l. Les viscosités absolues des solutions sont mesurées à l'aide d'un Low Shear 30 (Contraves) de type Couette à la température de 30°C et à des gradients de vitesse compris entre 0.017 s⁻¹ et 128 s⁻¹. La viscosité spécifique réduite en ml/g est calculée et tracée en fonction de la concentration C en polymère dans la solution. La viscosité intrinsèque [η] est obtenue par extrapolation de la viscosité spécifique réduite à concentration nulle en polymère. La pente de cette extrapolation est égale à k'[η]².

### Influence du gradient de cisaillement

Les mesures ont été réalisées à l'aide d'un rhéomètre coaxial à vitesse imposée de type Rhéomat 30 (Contraves).

| | ηᵣ à 0,1 s⁻¹ | ηᵣ à 500 s⁻¹ | perte en % |
|---|---|---|---|
| PAM | 900 | 90 | 90 |
| PSAM-5 | 170 | 90 | 47 |
| PPEAM-5 | 200 | 70 | 65 |

On met ainsi en évidence que la perte de viscosité aux plus forts gradients de cisaillement est moindre avec les dérivés zwitterioniques qu'avec le polyacrylamide. Ceci est important pour la formulation des fluides de forage car l'utilisation de ces dérivés zwitterioniques permet à la boue de conserver ses propriétés suspensives aux plus forts gradients de cisaillement.

### Influence de la force ionique

En présence d'ions monovalents, les polyacrylamides partiellement hydrolysés suivent une loi expérimentale dite de Pals (Pals, D.T.F.; Hermans, J.J. *Rec*. *Trav*. *Chim*. **1952**, *71*, 433.) : leur viscosité chute très fortement aux fortes salinités.

Comparativement, un polyacrylamide neutre est peu sensible aux variations de salinité.

| | [η] (ml/g) eau | [η] (ml/g) NaCl 0,1M | [η] (ml/g) NaCl 2,4M |
|---|---|---|---|
| PAM | 597 | 671 | 730 |
| HPAM-5 | 6500* | 1625 | 1150 |
| PSAM-1 | 384 | 397 | 429 |
| PSAM-5 | 364 | 379 | 480 |
| PPEAM-1 | 250 | 255 | 274 |
| PPEAM-5 | 848 | 657 | 699 |

| | | | |
|---|---|---|---|
| *NaCl 1,7 10⁻³M | | | |

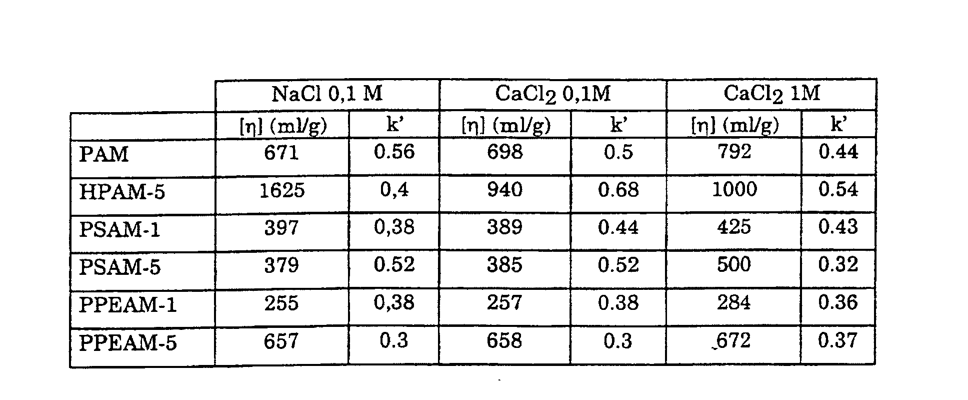

L'introduction de motifs zwitterioniques sur une chaîne de polyacrylamides permet d'obtenir un comportement dit antipolyélectrolyte. En effet, contrairement au polyacrylamide partiellement hydrolysé de même taux de motifs chargés, la viscosité reste constante voire augmente aux plus fortes salinités. De plus, en présence d'ions divalents, un polyacrylamide partiellement hydrolysé se trouve dans des conditions dites de mauvais solvant (fort k'), voire précipite. Au contraire un copolymère acrylamide/monomère zwitterionique reste en bon solvant et ne précipite pas. Ceci sera démontré sur les échantillons vieillis dans l'essai suivant.

### Effet de la température et du pH

L'étude de la stabilité des solutions de polymère, de concentrations dans NaCl 5 g/l variant entre 4.5 et 9 g/l selon les produits, a été menée à différentes températures et conditions de pH, en fonction du temps dans une cellule HP/HT avec une contre pression de 3 bar d'azote. La désaération des solutions se fait par stripping à l'azote et permet de limiter la teneur en oxygène à des taux compris entre 5 et 50 ppb. Après vieillissement, on détermine le taux de fonctions amide restant sur les chaînes du copolymère par dosage à l'aide du banc automatique Alliance "Evolution 2". Le taux d'hydrolyse τ déterminé après vieillissement correspond au taux de fonctions amides hydrolysées en fonctions carboxylates.
• pH naturel, 120°C, 50 ppb de O₂, NaCl 5g/l :
Influence de la durée de vieillissement: 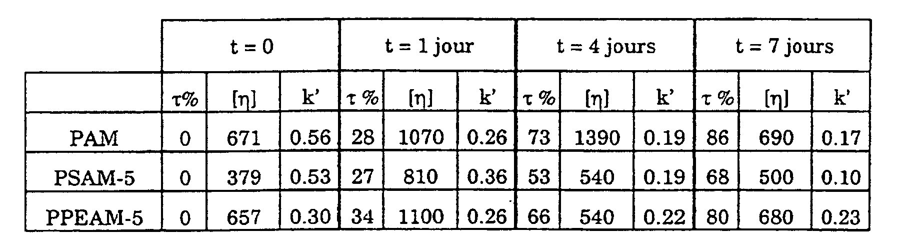
Les viscosités intrinsèques ([η]) sont exprimées en ml/g.
• pH 13, 80°C, NaCl 5g/l, sans élimination de O₂ préliminaire :
Influence de la durée de vieillissement:

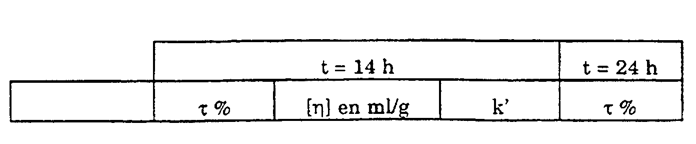

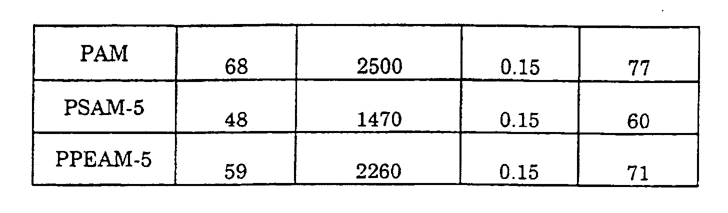

• pH 13, NaCl 5g/l, 14 heures sans élimination de O₂ préliminaire :
Influence de la température :

| | τ % à 5°C | τ % à 30°C | τ % à 80°C |
|---|---|---|---|
| PAM | 9 | 38 | 68 |
| PSAM-5 | 6 | 31 | 48 |
| PPEAM-5 | 10 | 43 | 59 |

• pH 11, NaCl 5g/l, 24 heures sans élimination de O₂ préliminaire :
Influence de la température :

| | τ % à 5°C | τ % à 80°C |
|---|---|---|
| PAM | 10 | 16 |
| PSAM-5 | 0 | 4 |
| PPEAM-5 | 0 | 4 |

• à 80°C, NaCl 5g/l, 24 heures sans élimination de O₂ préliminaire :
Influence du pH :

| | τ % à pH naturel | τ % à pH 11 | τ % à pH 13 |
|---|---|---|---|
| PAM | 16 | 16 | 77 |
| PSAM-5 | 3 | 4 | 60 |
| PPEAM-5 | 4 | 4 | 71 |

Certaines fonctions amides ont été hydrolysées : l'étude viscosimétrique indique un comportement de type polyélectrolyte anionique : les fonctions carboxylates des unités acrylates apportent un excès de charges négatives. Ainsi la viscosité intrinsèque augmente avec l'augmentation du taux de fonctions carboxylates. Toutefois, cette variation, tempérée par la présence des fonctions zwitterioniques, est moins spectaculaire qu'avec un polyacrylamide.

### Sensibilité au calcium des polymères vieillis:

Les polymères vieillis précédemment ont été référencés comme ci dessous :

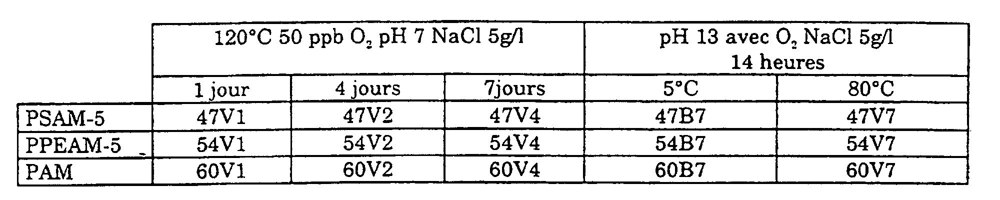

Le pH des échantillons de la série 7 (B7 et V7) est ajusté à 8 après vieillissement.

L'essai est ensuite ainsi réalisé :

Aux solutions de polymère de concentration 1.5 g/l est ajoutée sous agitation à température ambiante une solution de CaCl₂ 2M jusqu'à apparition d'un trouble. Dans tous les cas l'addition est poursuivie pour vérifier qu'il n'y a pas redissolution du polymère précipité. Lorsque le volume de solution ajouté atteint 5% du volume initial de solution de polymère et qu'aucun trouble n'est apparu, du CaCl₂ dihydraté en poudre est ajouté directement pour vérifier la stabilité du produit vis à vis des ions calcium à forte concentration en évitant toute dilution du polymère. Ainsi, le tracé de la concentration critique en CaCl₂ (point de trouble) en fonction du taux d'hydrolyse des produits permet les commentaires suivants :
A taux d'hydrolyse comparables, les composés zwitterioniques précipitent à des concentrations en ions calcium supérieures au polyacrylamide hydrolysé (47V4 par rapport à 60V7 et 54V4 par rapport à 60V2). Ainsi, les motifs zwitterioniques ont résisté au vieillissement, résultat confirmé sur certaines séries par RMN¹H et ¹³C et leur présence à 5% seulement limite la sensibilité aux ions calcium même à des taux de carboxylates supérieurs à 67%.

Le tableau suivant récapitule les concentrations critiques en CaCl₂ entraînant la précipitation des polymères après vieillissement. Les autres échantillons ne précipitent pas en présence de Ca⁺⁺.

| Echantillon | Taux d'hydrolyse | (CaCl2) critique (mol/l) |
|---|---|---|
| 47V4 | 68 | 0,058 |
| 60V7 | 68 | 0,053 |
| 60V2 | 73 | 0,030 |
| 54V4 | 80 | 0,050 |
| 60V4 | 87 | 0,020 |

### Adsorption sur une argile homoionique sodique

L'adsorption est mesurée par la méthode des restes après avoir mis en contact pendant 18 heures une solution de polymère d'une concentration connue en contact avec une suspension de montmorillonite homoionique sodique. Les tests sont réalisés à température ambiante, pH 8, NaCl 20 g/l, S/L 3,6.10⁻⁴ g/ml.

Le plateau d'adsorption correspond à la quantité maximale de polymère adsorbé sur l'argile.

| | Adsorption max (mg/g) |
|---|---|
| PAM | 480 |
| HPAM-5 | 250 |
| PSAM-1 | 400 |
| PSAM-5 | 670 |
| PSAM-10 | 650 |
| PSAM-5-2 | 620 |
| PPEAM-5 | 710 |

Les polymères ainsi préparés présentent un niveau d'adsorption supérieur au dérivé acrylamide classique. Le taux de 5% en motifs zwitterions semble être optimal en terme d'adsorption; la masse molaire jouant par ailleurs un rôle quasi négligeable.

### Propriétés de filtration

Comparaison de l'efficacité du copolymère PSAM-5 avec des réducteurs de filtrat classiques, pour des fluides à base de calcite.

### a) Conditions : Standard API et à température ambiante (25°C).

Formulation de base FB : Xanthane 4 g/l, Hymod Prima (HMP) 28.5 g/l, NaCl 20 g/l, KCl 20 g/l et Calcite (IDCARB 75) 360 g/l pour une densité finale de 1.2. Le pH est ajusté à 9.5 par de la soude 2 N.

| Additif à FB | Filtrat 30' | VP | YV | Cake à 120' | Perméabilité du cake à 120 min (à Pₐₜₘ) | Carbone orga. au plateau | Cpf/Cplm |
|---|---|---|---|---|---|---|---|
| CMC basse vis. 10 g/l | 3.3 | 17 | 18 | 1 | 0.0003 | 800 | 0.23 |
| HOSTADRILL 5 g/l | 6.7 | 15 | 24 | 1.5 | 0.00095 | 780 | 0.32 |
| PSAM-5 5 g/l | 4.4 | 16 | 28 | 1.3 | 0.0006 | 140 | 0.055 |

La viscosité plastique est exprimée en centipoise (cP), la valeur de seuil, ou yield value (YV), est exprimée en livres/100pieds carré, le filtrat 30 minutes en millilitre (ml), les épaisseurs de cake en millimètre (mm), la perméabilité du cake en millidarcy (mD) et le carbone organique en mg/l (ou ppm). Le rapport Cpf sur Cplm exprime le rapport de la concentration en polymère dans le filtrat au plateau sur la concentration en polymère libre dans le mélange de départ.

La concentration en polymère libre dans le mélange de départ est obtenue après centrifugation de la formulation et déterminée à l'aide d'un analyseur de carbone. Les filtrats sont dosés à l'aide du même analyseur.

Le Xanthane de marque IDVIS et la CMC basse viscosité utilisés sont commercialisés par la Société DOWELL-IDF; quant à l'HOSTADRILL, il est commercialisé par la Société HOESCHT. L'HMP est une argile de charge qui simule une contamination de la formulation par des déblais.

Remarques : Les caractéristiques de filtration avec le copolymère sont du même ordre de grandeur que celles de la CMC basse viscosité et plus faible que celle de l'HOSTADRILL pour des caractéristiques rhéologiques identiques à ce dernier. Les concentrations en carbone organique sont de l'ordre de 6 fois inférieures à celles obtenues à l'aide de réducteurs de filtrats commerciaux et, entre autre, pour une concentration initiale en polymère identique à celle de la formulation contenant de l'HOSTADRILL. Malgré des filtrats "30 minutes" très faibles concernant la formulation à base de CMC basse viscosité, le filtrat reste très chargé en carbone organique, contrairement à celle contenant le copolymère décrit ici.

### b) Conditions : Standard API, dans une cellule de test HP/HT avec une pression de 50 bar et une contre-pression de 15 bar (dP = 35 bar), température de 110°C.

Formulation de base FB : Xanthane 4 g/l, Hymod Prima (HMP) 28.5 g/l, NaCl 20 g/l, KCl 20 g/l et Calcite (IDCARB 75) 360 g/l pour une densité finale de 1.2. Le pH est ajusté à 9.5 par de la soude 2 N.

| Additif à FB | Filtrat 30 min | VP | YV | Cake à 120 min | Perméabilité du cake à 120 min (à Pₐₜₘ) | Carbone - orga. au plateau | Cpf/Cplm |
|---|---|---|---|---|---|---|---|
| Température de filtration : 110°C | | | | | | | |
| CMC basse vis. 10 g/l | 8 | 17 | 18 | - | - | - | - |
| HOSTADRILL 5 g/l | 40.1 | 15 | 24 | 5.5 | 0.0012 | 1600 | 0.63 |
| PSAM-5 5 g/l | 22.4 | 16 | 28 | 4 | 0.00044 | 400 | 0.16 |

Remarques : La formulation contenant la CMC basse viscosité est dégradée lors de la période de chauffage précédant la filtration en température (environ 1 heure) et on n'observe pas de formation de cake. A cette densité, la formulation contenant le copolymère donne un cake peu perméable contrairement à la formulation contenant de l'HOSTADRILL, ce qui se traduit par un filtrat "30 minutes" plus faible et par une concentration en carbone organique 4 fois moins importante. On notera la chute en polymère libre dans le filtrat, liée à la présence du copolymère dans ce type de formulation.

## Revendications

1. Copolymères hydrosolubles d'acrylamide ou d'acrylate plus ou moins substitués et de monomères zwitterioniques, **caractérisés en ce qu'**ils ont pour structure générale: 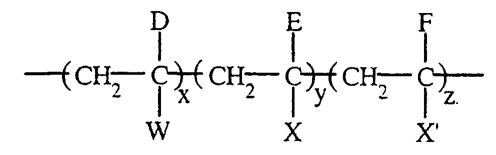
■ W est un groupement CONH₂ ou CONHR ou CONRR' ou COO⁻ ou COOR", où R, R' et R" sont des radicaux aliphatiques linéaires ou ramifiés.
■ D, E, F sont un atome d'hydrogène ou un groupement méthyle.
■ X et X' répondent à l'une des deux formules suivantes : 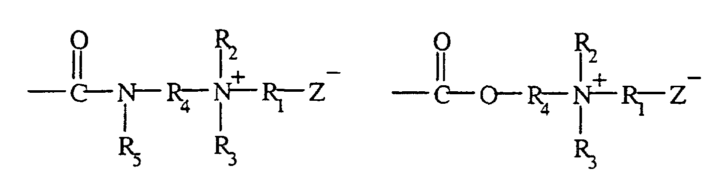
■ R₂ et R₃ sont chacun un radical hydrocarboné monovalent,
■ R₁ est un groupement organique divalent comprenant une chaîne linéaire constituée d'atomes de carbone, l'ensemble contenant de 3 à 12 atomes en chaîne linéaire, éventuellement interrompue par 1 atome d'azote porteur d'une fonction amide ou 1 à 3 atomes d'oxygène et comprenant éventuellement des substituants alkyles ou hydroxyles,
■ R₄ un groupement aliphatique linéaire ou ramifié et R₅ un radical hydrocarboné.
■ Z⁻ répond à au moins l'une des formules suivantes correspondant respectivement aux sulfobétaines et aux phosphobétaines: 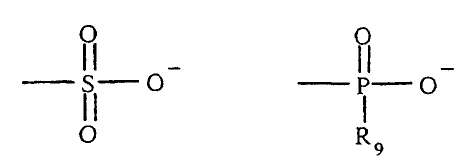
■ R₉ est un radical méthyle, phényl ou alkoxy,
et **en ce qu'**au moins les sulfobétaines sont synthétisés en absence de sels, x, y, z pourcentage molaire et y+z non nul, y+z est au plus égal à 40% par rapport à x+y+z.

2. Copolymères selon la revendication 1, **caractérisés en ce que** dans le cas des sulfobétaines, R₁ prend l'une des deux formules suivantes: 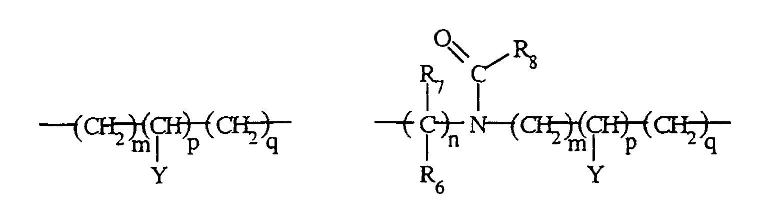 dans lesquelles R₆ et R₇ représentent chacun un radical substantiellement hydrocarboné et R₈ un atome d'hydrogène ou un radical hydrocarboné; n, m, p, q nombres entiers n est un nombre entier égal à 2 ou à 3; Y est un groupement méthyle ou hydroxyle; p est égal à 0 ou 1.

3. Copolymères selon la revendication 2, dans lesquels Y-est un groupement hydroxyle, p est égal à 1, m est égal à 1 et q est égal à 1.

4. Copolymères selon la revendication 2, dans lesquels Y est un groupement méthyle, p est égal à 1, m est égal à 2 et q peut prendre la valeur 0 ou 1.

5. Copolymères selon la revendication 2, dans lesquels p est égal à 0, et la somme m+q est égale à 2, 3 ou 4.

6. Copolymères selon la revendication 1, **caractérisés en ce que** dans le cas des phosphobétaines, R₁ répond à l'une des quatre formules suivantes : 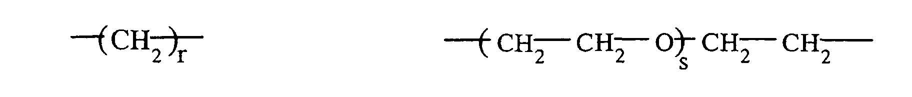 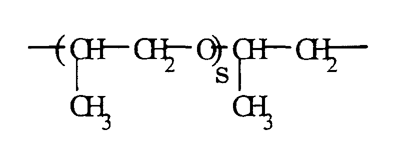 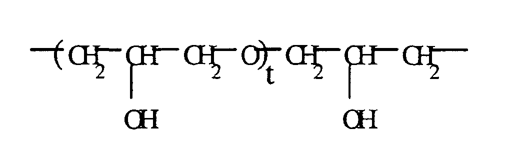 r est un nombre entier pouvant prendre les valeurs de 3 à 12, s est un nombre entier pouvant prendre les valeurs de 1 à 3 et t est un nombre entier pouvant prendre les valeurs 1 ou 2.

7. Copolymères selon l'une des revendications 1 à 5, dans lequel le monomère zwitterionique est :
3-[(3-acrylamidopropyl)diméthylammonio]propanesulfonate (PSAM), de masse molaire comprise entre 300000 et 2000000 g/mol et de taux molaire de motifs switterioniques compris entre 1 et 6%.

8. Copolymères selon la revendication 6, dans lequel le monomère zwitterionique est :
3-[(3-acrylamidopropyl)diméthylammonio]propane phosphonate d'éthyle (PPEAM), de masse molaire comprise entre 600000 et 3000000 g/mol et de taux molaire de motifs switterioniques compris entre 0,5 et 6%.

9. Fluide à base d'eau comportant le polymère selon l'une des revendications 1 à 8 comme agent viscosifiant.

10. Application du fluide selon la revendication 9 à des fluides de forage dans des puits hautes températures.

11. Procédé d'obtention des monomères et des copolymères selon l'une des revendications 1 à 8, dans lequel la synthèse a lieu sans sels.

## Claims

1. More or less substituted water-soluble copolymers of acrylamide or acrylate and zwitterionic monomers,
***characterised in that*** they have the general structure: 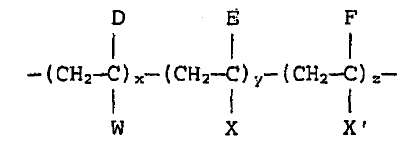
- W is a CONH₂ or CONHR or CONRR' or COO⁻ or COOR" group in which R, R' and R" are linear or branched aliphatic radicals;
- D, E, F are a hydrogen atom or a methyl group;
- X and X' correspond to one of the following two formulae: 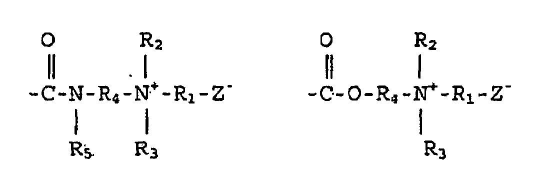
- R₂ and R₃ are each a monovalent hydrocarbon radical;
- R₁ is a divalent organic group comprising a linear chain constituted of carbon atoms, the lot containing 3 to 12 atoms in a linear chain, possibly interrupted by 1 nitrogen atom having an amide function or 1 to 3 oxygen atoms and possibly comprising alkyl or hydroxyl substituents;
- R₄ is a linear or branched aliphatic group and R₅ is a hydrocarbon radical;
- Z corresponds to at least one of the following formulae corresponding respectively to the sulfobetains and the phosphobetains: 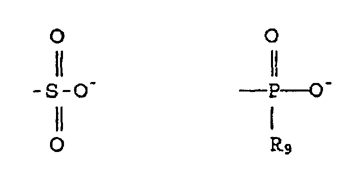
- R₉ is a methyl, phenyl or alkoxy radical;
and **in that** at least the sulfobetains are synthesised in the absence of salts; x, y, z are the molar percentage and y+z is not zero; y+z is at most equal to 40% in relation to x+y+z.

2. Copolymers according to claim 1, **characterised in that** in the case of the sulfobetains, R₁ has one of the following two formulae; 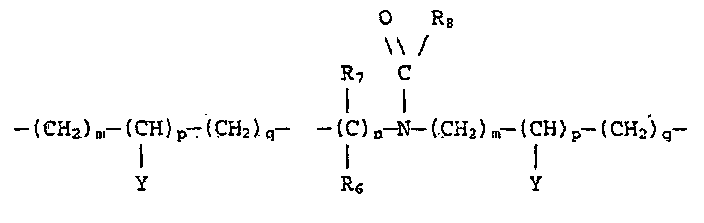 in which R₆ and R₇ each represent a substantially hydrocarbon radical and R₈ is a hydrogen atom or a hydrocarbon radical; n, m, p, q are whole numbers; n is a whole number equal to 2 or to 3; Y is a methyl or hydroxyl group; p is equal to 0 or 1.

3. Copolymers according to claim 2, in which Y is a hydroxyl group, p is equal to 1, m is equal to 1 and q is equal to 1.

4. Copolymers according to claim 2, in which Y is a methyl group, p is equal to 1, m is equal to 2 and q can have the value 0 or 1.

5. Copolymers according to claim 2, in which p is equal to 0, and the sum m+q is equal to 2, 3 or 4.

6. Copolymers according to claim 1, ***characterised in that*** in the case of the phosphobetains, R₁ corresponds to one of the following four formulae: 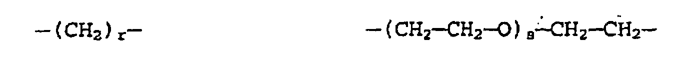 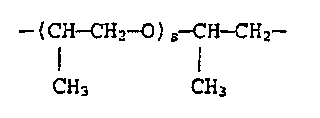 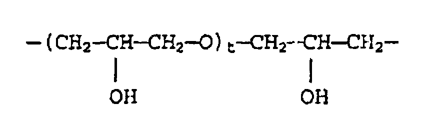 r is a whole number which can have the values of 3 to 12, s is a whole number which can have the values of 1 to 3 and t is a whole number which can the values 1 or 2.

7. Copolymers according to one of claims 1 to 5, in which the zwitterionic monomer is:
3-[(3-acrylamidopropyl)dimethylammonio]propanesulfonate (PSAM) with a molar mass of between 300000 and 2000000 g/mol and a molar proportion of zwitterionic units of between 1 and 6%.

8. Copolymers according to claim 6, in which the zwitterionic monomer is:
ethyl 3-[(3-acrylamidopropyl)dimethylammonio]propane phosphonate (PPEAM), with a molar mass of between 600000 and 3000000 g/mol and a molar proportion of zwitterionic units of between 0.5 and 6%.

9. Water-based fluid comprising the polymer according to one of claims 1 to 8 as viscosifying agent.

10. Application of the fluid according to claim 9 to drilling fluids in high-temperature wells.

11. Method for obtaining the monomers and the copolymers according to one of Claims 1 to 8, in which the synthesis takes place without salts.

## Patentansprüche

1. Höher oder geringer substituiertes wasserlösliches Acrylamid oder Acrylat Kopolymer und zwitterionisches Monomeres, **gekennzeichnet durch** die allgemeine Struktur: 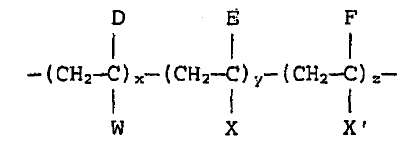 wobei
W eine Gruppe CONH₂ oder CONHR oder CONRR' oder COO⁻ oder COOR", wobei R, R' und R" lineare oder verzweigte aliphatische Radikale sind.
D, E, F sind Wasserstoffatome oder ein Methylgruppe.
X und X' entsprechen einer der zwei folgenden Strukturformeln: 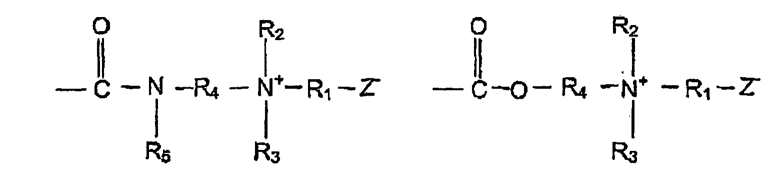
R₂ und R₃ sind jeweils ein monovalentes teerhaltiges Radikal
R₁ ist eine divalente organische Gruppe umfassend eine lineare Kette bestehend aus Kohlenstoffatomen, wobei die Gruppe 3 bis 12 Atome in der linearen Kette, eventuell **durch** ein, eine Amidfunktion aufweisendes Stickstoffatom oder **durch** 1 bis 3 Sauerstoffatome unterbrochen und eventuell umfassend alkylische oder hydroxylische Substituenten,
R₄ ist eine lineare oder verzweigte aliphatische Gruppe und R₅ ein teerhaltiges Radikal.
Z⁻ entspricht wenigstens einer der folgenden Formeln entsprechend jeweils Sulfobetainen und Phosphobetainen: 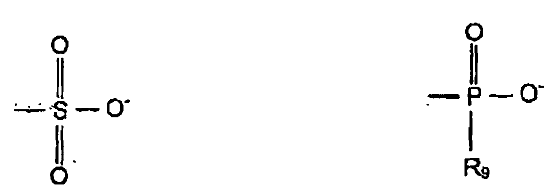
R₉ ist ein Methyl-, Phenyl- oder Alkoxyradikal,
und **dadurch**, daß zumindest die Sulfobetaine in Abwesenheit von Salzen synthetisiert werden, die Molprozente von x, y, z und y+z nicht Null sind, y+z größer als 40% im Verhältnis zu x+y+z ist.

2. Kopolymeres gemäß Anspruch 1, **dadurch gekennzeichnet, dass** im Fall der Sulfobetaine R₁ eine der beiden folgenden Formen annimmt: 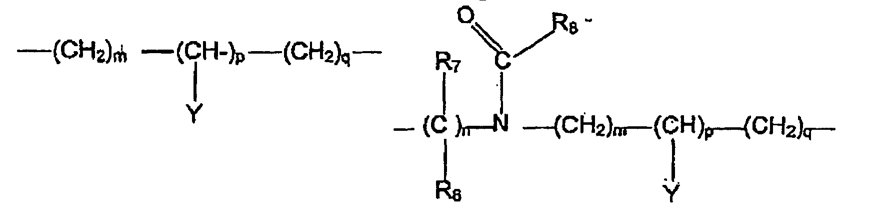 bei denen R₆ und R₇ jeweils ein substantiell teerhaltiges Radikal darstellen und R₈ ein Wasserstoffatom oder ein teerhaltiges Radikal; n, m, p, q sind ganze Zahlen, n ist eine ganze Zahl entsprechend 2 oder 3; Y ist eine Methylgruppe oder eine Hydroxylgruppe; p ist gleich 0 oder 1.

3. Kopolymer nach Anspruch 2, bei dem Y eine Hydroxylgruppe ist, p gleich 1 ist, m gleich 1 ist und q gleich 1 ist.

4. Kopolymer nach Anspruch 2, bei dem Y eine Methylgruppe ist, p gleich 1 ist, m gleich 2 ist und q den Wert 0 oder 1 annehmen kann.

5. Kopolymer nach Anspruch 2, bei dem p gleich 0 ist, und die Summe aus m+q gleich 2, 3 oder 4 ist.

6. Kopolymer nach Anspruch 1, **dadurch gekennzeichnet, dass** im Fall der Phophobetaine, R₁ einer der folgenden vier Formeln entspricht: 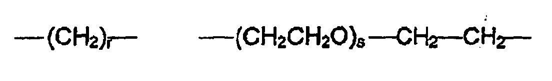 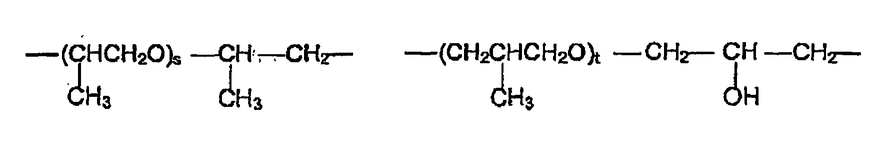 r ist eine ganze Zahl die Werte zwischen 3 und 12 annehmen kann, s ist eine ganze Zahl die Werte zwischen 1 und 3 annehmen kann und t ist eine ganze Zahl die die Werte 1 oder 2 annehmen kann.

7. Kopolymer gemäß einem der Ansprüche 1 bis 5, bei dem das zwitterionische Monomer 3-[(3-Acylamidopropyl)dimethylammonio]propansulfonat (PSAM) mit einer Molmasse zwischen 300000 und 2000000 g/mol und einem molaren Prozentsatz an zwitterionischen Einheiten zwischen 1% und 6% ist.

8. Kopolymer nach Anspruch 6, bei dem das zwitterionische Monomer 3-[(3-Acylamidopropyl)dimethylammonio]propanphosphonat d'ethyl (PPEAM) mit einer Molmasse zwischen 600000 und 3000000 g/mol ist und einem molaren Prozentsatz an zwitterionischen Einheiten zwischen 0,5 und 6%.

9. Fluid auf der Basis von Wasser umfassend ein Polymer gemäß einem der Ansprüche 1 bis 8 als viskosifizierendes Mittel.

10. Anwendung des Fluids nach Anspruch 9 auf die Bohrfluide in Hochtemperatur-Ölbohrungen.

11. Verfahren zum Erhalt der Monomere und der Kopolymere nach einem der Ansprüche 1 bis 8 bei dem die Synthese ohne Salze erfolgt.
